# EUROPÄISCHE PATENTSCHRIFT

(11) **EP 1 875 166 B1**
(45) Veröffentlichungstag und Bekanntmachung des Hinweises auf die Patenterteilung: **07.05.2014**
(21) Anmeldenummer: 06725464.9
(22) Anmeldetag: 31.03.2006
(51) Int. Cl.: G01C 21/36, G08G 1/0969, G08G 1/16, G09B 29/10

(54) **VERFAHREN ZUR DREIDIMENSIONALEN DARSTELLUNG EINER DIGITALEN STRASSENKARTE**
METHOD FOR THREE-DIMENSIONALLY DISPLAYING A DIGITAL ROAD MAP
PROCEDE DE REPRESENTATION TRIDIMENSIONNELLE D'UNE CARTE ROUTIERE NUMERIQUE

(30) Priorität: 19.04.2005 DE 102005018082
(43) Veröffentlichungstag der Anmeldung: 09.01.2008
(73) Patentinhaber: ROBERT BOSCH GMBH, 70442 Stuttgart (DE)
(72) Erfinder: JUNG, Thomas, 33613 Bielefeld (DE)
(86) Internationale Anmeldenummer: PCT/EP2006/061216
(87) Internationale Veröffentlichungsnummer: WO 2006/111461

(56) Entgegenhaltungen:
- EP-A- 0 747 863
- EP-A- 0 802 516
- EP-A- 1 085 299
- US-A- 6 011 494
- US-B1- 6 611 753

## Beschreibung

### Technisches Gebiet

Die Erfmdung betrifft ein Verfahren zur dreidimensionalen Darstellung einer digitalen Straßenkarte gemäß dem Oberbegriff des Anspruchs 1 sowie eine Navigationseinrichtung gemäß dem Oberbegriff des Anspruchs 10.

### Stand der Technik

Aus dem Stand der Technik sind Navigationseinrichtungen bekannt, bei welchen ein Teil einer Straßenkarte abhängig von der Position eines Fahrzeugs und dessen Bewegungsrichtung auf einem Bildschirm wiedergegeben wird. Dabei sind verschiedene Darstellungsarten üblich, welche bezüglich der ihnen zugrundeliegenden Datenstrukturen und der vom System ausgeführten Rechenoperationen in verschiedene Kategorien eingeteilt werden. Das einfachste Modell ist eine zweidimensionale Darstellung einer die Navigationsdaten (Flächen, Linien, Punkte, Beschriftungen) enthaltenden Vektorkarte. Um den Fahrzeugführenden möglichst leicht zu interpretierende, visuelle Informationen über ihre Umgebung zur Verfügung zu stellen, wird dagegen oft eine perspektivische Darstellung der Kartendaten bevorzugt. Wahlweise kann die Darstellung dabei Höheninformationen des nicht notwendigerweise ebenen Geländes enthalten oder lediglich eine dreidimensionale Darstellung einer "flachen" Karte sein. Letzteres Modell wird als pseudo-3D Darstellung bezeichnet, In beiden Fällen müssen die der Karte zugrundeliegenden Daten einer Vektorkarte unter dem Einfluss einer Koordinatentransformation in die eine perspektivische Repräsentation enthaltenden Bilddaten umgerechnet werden. Üblicherweise wird eine lineare Abbildungsvorschrift eingesetzt, bei welcher für in der Karte vorhandene Linien einfach deren Endpunkte projiziert und wieder mit einer Linie verbunden werden. Aus diesen Linien setzen sich dann zu füllende Polygone zusammen. Ein Standard-CPU (Central Processing Unit) oder eine GPU (Graphical Processing Unit) führt die notwendigen 3D-Vektoroperationen und Polygon-Schattierungen in Hardware aus.

Der perspektivische Eindruck wird dadurch erreicht, dass eine virtuelle Betrachtungsposition oberhalb der tatsächlichen Fahrzeugposition gewählt wird. Je höher die Betrachtungsposition ist, desto mehr Informationen werden dem Benutzer zur Verfügung gestellt, welche er von seiner Position in seinem Fahrzeug gegebenenfalls nicht erhalten würde. Oftmals wird zur besseren Orientierung auch die Position des Fahrzeugs auf der Karte wiedergegeben.

Zur Berechnung der Bilddaten kann im Prinzip jedes Projektionsverfahren verwendet werden, welches eine räumliche Wirkung erzeugt. Besonders bekannt ist dabei die Zentralprojektion, bei welcher alle in der Karte abzubildenden Punkte über Verbindungslinien mit dem Projektionszentrum, welches mit der Betrachtungsposition zusammenfällt, über Verbindungslinien verbunden sind, deren Schnittpunkte mit einer Projektionsebene das projizierte Bild ergibt. Aufgrund der Geometrie einer solchen oder ähnlichen Projektion erscheint in der visuellen Darstellung ein Horizont, in dessen Nähe die Straßen, Füllflächen etc. dicht gedrängt erscheinen. Für den Benutzer der Navigationseinrichtung enthält die visuelle Darstellung sowohl in diesem Bereich, als auch in einem über dem Horizont liegenden, den Luftraum repräsentierenden Bereich, welcher oftmals nur dekorative Texturen enthält, nur wenige ihm nützliche Informationen.

Aus EP 1 085 299 A2 ist ein Navigationssystem bekannt, bei welchem auf einer Anzeige eine dreidimensionale Kartendarstellung angezeigt wird.

Dabei werden topographische Information zu Gebäuden oder Verkehrsstrecken entsprechend einem virtuellen, erhöhten Blickpunkt unterhalb einer Horizontlinie dargestellt und navigations relevante Hinweise oberhalb der Horizontlinie.

### Darstellung der Erfindung, Aufgabe, Lösung, Vorteile

Aufgabe der Erfindung ist es, die genannten Bereiche in der Nähe des Horizontes der visuellen Darstellung verstärkt zu nutzen und dem Benutzer ergänzende Informationen zu liefern.

Erfindungsgemäß wird diese Aufgabe mittels eines Verfahrens mit den im Anspruch 1 genannten Merkmalen oder mittels einer Navigationseinrichtung mit den im Anspruch 7 genannten Merkmalen gelöst.

Dadurch, dass im zweiten Bereich navigations- oder orientierungsrelevante Informationen als Bildelemente gezeichnet werden, wird vorteilhaft eine bessere Nutzung einer für die visuelle Darstellung der digitalen Straßenkarte benutzten Gesamtfläche einer Anzeigevorrichtung erreicht.

In bevorzugter Ausgestaltung der Erfindung ist vorgesehen, dass die navigations- oder orientierungsrelevanten Informationen Nahbereichsanweisungen umfassen. Hierdurch wird erreicht, dass der Benutzer mit Informationen über das Gelände versorgt wird, in welchem er sich bewegt oder in dessen unmittelbarer Nähe er sich befindet.

Weiter ist bevorzugt, dass die navigations- oder orientierungsrelevanten Informationen Informationen über Zielorte oder Zielstrecken umfassen, also geographische Elemente individueller Natur. Der Benutzer bestimmt dabei durch Eingabe in die Navigationseinrichtung, welches sein Reiseziel ist, und welche Strecke er benutzen möchte, um sein Reiseziel zu erreichen. Zusätzlich kann er Zwischenziele eingeben, an denen er z.B. weitere Reisende aufnehmen oder eine Reisepause einlegen möchte. Diese individuellen Informationen werden im Bereich oberhalb des Horizonts dargestellt, ohne die statischen Informationen in der Straßenkarte zu verdecken.

Weiter ist bevorzugt, dass die navigations- oder orientierungsrelevanten Informationen die Lage von Städten, insbesondere Großstädten, oder Verkehrsstrecken, insbesondere Autobahnen, oder aber auch markante oder wichtige Orte oder Straßen beinhalten. Dadurch können Elemente mit hoher Verkehrsbedeutung, insbesondere wichtige Verkehrsstrecken, selbst dann wiedergegeben werden, wenn sie sich in einem großen geographischen Abstand von der aktuellen Position des Fahrzeugs befinden und in der Darstellung nach dem Stand der Technik kaum identifizierbar wären. Die Verkehrsbedeutung verschiedener Elemente wird entweder als Eigenschaft in der Straßenkarte vermerkt oder in Abhängigkeit von der Fahrereingabe bestimmt.

Insbesondere ist bevorzugt, dass die navigations- oder orientierungsrelevanten Informationen oberhalb von Schnittpunkten zwischen die Informationen betreffenden ausgedehnten Kartenelementen, wie Straßen, Zielstrecken, Autobahnen oder ähnlichem, und einem Kreis, dessen Mittelpunkt durch die Fahrzeugposition gegeben ist, oder einer Linie parallel zum Horizont gezeichnet werden. Falls die Projektion oder die der Berechnung der visuellen Darstellung zugrundeliegenden topographischen Informationen auch die Erdkrümmung berücksichtigt, kann auch der Schnittpunkt der ausgedehnten Kartenelemente mit dem Horizont berechnet werden. Eine gegebenenfalls vorliegende Mehrdeutigkeit wird sinnvollerweise dadurch aufgelöst, dass derjenige Punkt gewählt wird, welcher in Fahrtrichtung der näherliegende ist. Eine Auflösung kann auch durch eine Hierachie von Objekten erfolgen, wenn die Wichtigkeit als Parameter existiert.

Des Weiteren wird die Aufgabe der Erfindung durch die erfindungsgemäße Navigationseinrichtung gelöst.

Weitere bevorzugte Ausgestaltungen der Erfindung ergeben sich aus den in den Unteransprüchen genannten Merkmalen.

### Kurze Beschreibung der Zeichnungen

Nachstehend wird die Erfindung in einem Ausführungsbeispiel anhand der beigefügten Zeichnungen näher erläutert. Es zeigen:
Figur 1 eine erfindungsgemäße Navigationseinrichtung;
Figur 2 eine visuelle Darstellung einer Straßenkarte mit Informationen über Autobahnen;
Figur 3 eine visuelle Darstellung einer Straßenkarte mit Informationen über die Lage von Großstädten und
Figur 4 eine visuelle Darstellung einer Straßenkarte mit einer Angabe von Himmelsrichtungen.

### Bester Weg zur Ausführung der Erfindung

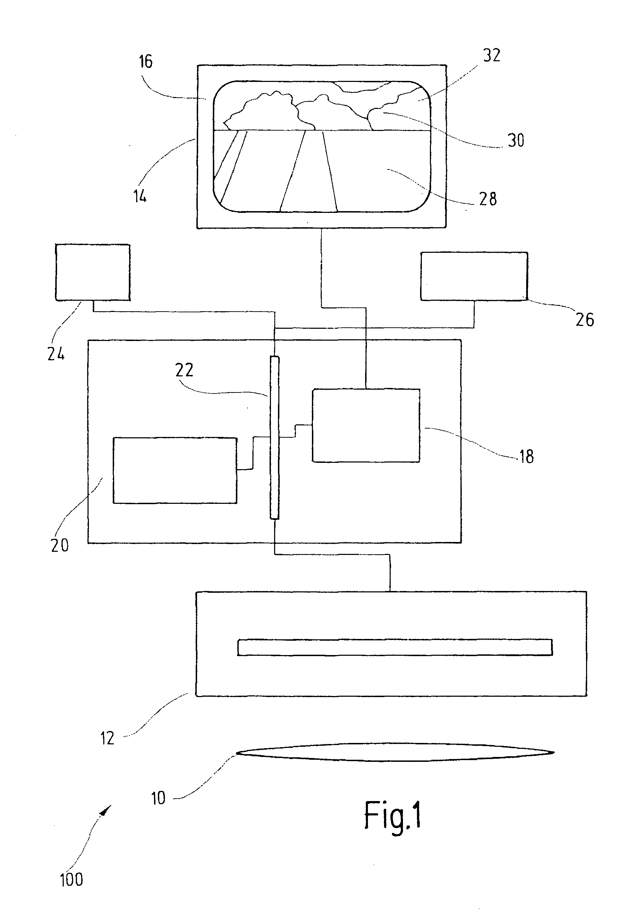

Figur 1 zeigt eine insgesamt mit 100 bezeichnete Navigationseinrichtung. Die Daten einer digitalen Straßenkarte sind auf einem Speichermedium 10 gespeichert, beispielsweise auf einer CD-ROM oder einer DVD, welcher sich in einem Laufwerk 12 befindet. Auf einer Anzeigeeinrichtung 14 wird eine visuelle Darstellung der digitalen Straßenkarte 16 angezeigt, welche von einem Mikroprozessor 18 erzeugt wird, welcher die aktuelle Position des Fahrzeugs auf der Grundlage von Messdaten, welche von einem Positionssensor 24 wie z.B. einen GPS-Sensor und einem Richtungsmesser 26 ermittelt werden, berechnet und einen Teil der Straßenkarte aus dem Speichermedium 10 liest, welcher die aktuelle Position des Fahrzeugs einschließt. Der Mikroprozessor 18, welcher über einen Systembus 22 mit einem Arbeitsspeicher 20 verbunden ist, berechnet in regelmäßigen Zeitabständen perspektivische Bilder, welche an die aktuelle Position und Orientierung des Fahrzeugs angepasst sind und den Fahrzeugführenden mit Informationen über seine unmittelbare Umgebung und den angestrebten Zielort versorgt. Die auf der Anzeigeinrichtung 14 wiedergegebene visuelle Darstellung der digitalen Straßenkarte 16 weist einen die topographischen Informationen enthaltenen ersten Bereich 28 und einen von dem ersten Bereich durch einen Horizont 30 getrennten zweiten Bereich 32 auf, welcher dem Luftraum entspricht. Die durch den Mikroprozessor 18 und den Arbeitsspeicher 20 gebildete Bildumwandlungseinheit umfasst Mittel zum Zeichnen von Bildelementen mit navigations- oder orientierungsrelevanten Informationen, welche in dem zweiten Bereich 32 angezeigt werden.

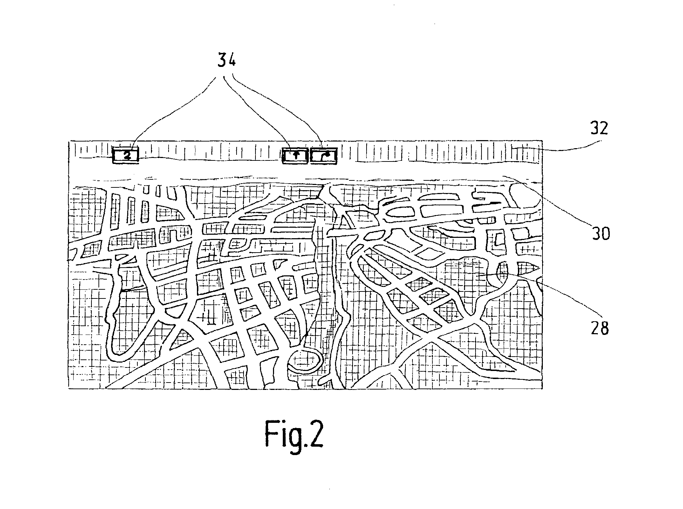

Figur 2, 3 und 4 zeigen im genaueren Detail die visuelle Darstellung einer Straßenkarte 16.

Die visuelle Darstellung 16 beschränkt sich auf ein in Fahrtrichtung liegendes Blickfeld auf der Grundlage eines erhöhten, virtuellen Standpunktes, seitlich begrenzt durch einen gegebenen Öffnungswinkel der Darstellung. Die Darstellung ist nicht unbedingt an die Blickrichtung oder Fahrtrichtung gekoppelt. Eine manuelle freie Drehung um die aktuelle Position ist ebenso denkbar. Der die topographischen Informationen enthaltene erste Bereich 28 stellt unter Verwendung einer Koordinatentransformation aus den auf dem Speichermedium abgespeicherten Daten einer digitalen Straßenkarte ausgerechnete Straßensegmente und an sie grenzende Füllflächen farblich dar. Die in der Anzeigeeinrichtung 14 angezeigten Bilder werden periodisch neu berechnet und dargestellt. Das erfindungsgemäße Verfahren bezieht sich auf jedes einzelne solcher Bilder. Im dem Luftraum entsprechenden zweiten Bereich 32 werden navigations- oder orientierungsrelevante Informationen als Bildelemente gezeichnet. Dabei werden für die jeweilige Information die passende horizontale Position aus der Fahrzeugausrichtung und der Position der Information in der digitalen Straßenkarte ermittelt. Daraus ergibt sich die Position über dem Horizont 30, an welcher die Bildelemente gezeichnet werden.

In Figur 2 werden Bildelemente mit Informationen über die Lage von Autobahnen 34 angezeigt. Da es sich bei Verkehrsstrecken um ausgedehnte, nicht punktuelle Kartenelemente handelt, wird der Schnittpunkt einer anzuzeigenden Verkehrstrecke mit einem Kreis, dessen Mittelpunkt durch die Fahrzeugposition gegeben ist, oder einer Linie parallel zum Horizont 30 bestimmt. Bevorzugt werden diejenigen Verkehrselemente angezeigt, welche sich in der Nähe einer vorgegebenen Fahrstrecke 14 befinden, auf welcher sich das Fahrzeug gerade befindet und/oder welche von einem Routenplaner als optimale Strecke berechnet worden ist.

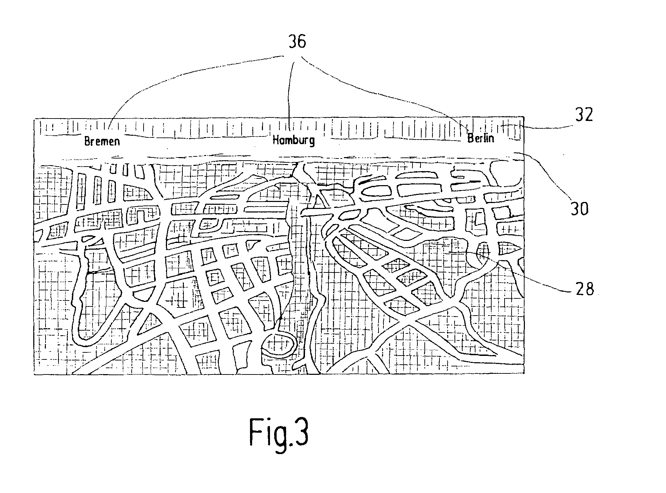

In Figur 3 werden Bildelemente mit Informationen über die Lage von Großstädten 36 angezeigt. Dabei stellt der Abstand zwischen angezeigten und der optimalen, vom Navigationssystem bestimmten Route ein mögliches Kriterium für die Selektion dar. Großstädte, welche sich außerhalb des in Fahrtrichtung liegenden beschränkten Blickfelds befinden, werden am äußeren Rand der visuellen Darstellung 16 wiedergegeben und mit Richtungspfeilen versehen.

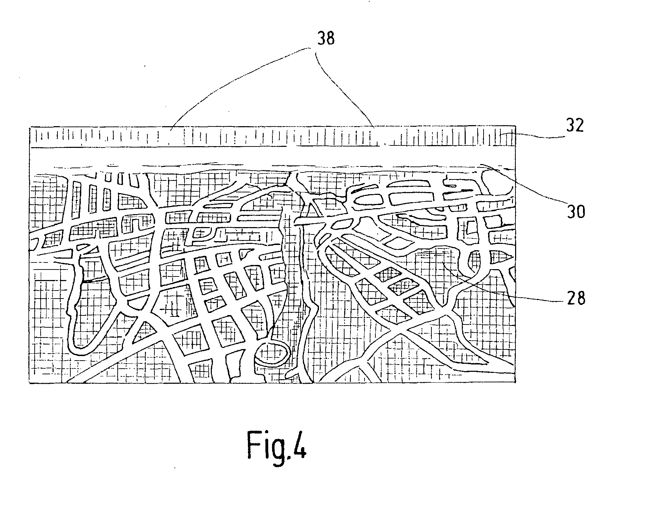

In Figur 4 werden Bildelemente mit Informationen über Himmelsrichtungen 38 angezeigt.

Weitere Bildelemente, welche dem Fahrenden nützliche Informationen zur Verfügung stellen, beziehen sich auf Nahbereichsanweisungen wie z.B. die Aufforderung an den Fahrenden zum Abbiegen an einer auflcommenden Verkehrskreuzung.

## Patentansprüche

1. Verfahren zur dreidimensionalen Darstellung wenigstens eines Teils einer digitalen Straßenkarte in einem Navigationssystem (100), wobei topographische Informationen aus auf einem Speichermedium (10) abgespeicherten Daten in Abhängigkeit von einer Position und einer Fahrtrichtung eines Kraftfahrzeugs selektiert und unter Verwendung einer Koordinatentransformation in eine visuelle Darstellung der digitalen Straßenkarte (16) entsprechend eines virtuellen, erhöhten Blickpunktes überführt werden, so dass die visuelle Darstellung der digitalen Straßenkarte (16) einen die topographischen Informationen enthaltenen ersten Bereich (28) und einen von dem ersten Bereich (28) durch einen Horizont (30) getrennten zweiten Bereich (32) aufweist,
wobei im zweiten Bereich (32) navigations- oder orientierungsrelevante Informationen als Bildelemente gezeichnet werden,
wobei die navigations- oder orientierungsrelevanten Informationen die Lage von Städten, insbesondere Großstädten (36), oder Verkehrsstrecken, insbesondere Autobahnen (34), beinhalten und
wobei Städte angezeigt werden, deren Verhältnis ihrer Größe zu ihrem geographischen Abstand von der Fahrzeugposition einen vorbestimmten Wert übersteigt oder die auf einer von einem Benutzer gewählten Route liegen.

2. Verfahren nach Anspruch 1,
**dadurch gekennzeichnet, dass**
die navigations- oder orientierungsrelevanten Informationen Nahbereichsanweisungen umfassen.

3. Verfahren nach einem der vorangehenden Ansprüche,
**dadurch gekennzeichnet, dass**
die navigations- oder orientierungsrelevanten Informationen Informationen über Zielorte oder Zielstrecken umfassen.

4. Verfahren nach einem der vorangehenden Ansprüche,
**dadurch gekennzeichnet, dass**
die navigations- oder orientierungsrelevanten Informationen Himmelsrichtungen beinhalten.

5. Verfahren nach einem der vorangehenden Ansprüche,
**dadurch gekennzeichnet, dass**
die navigations- oder orientierungsrelevanten Informationen oberhalb der sie betreffenden Kartenelemente wie Städte oder Zielorte gezeichnet werden.

6. Verfahren nach einem der vorangehenden Ansprüche,
**dadurch gekennzeichnet, dass**
die navigations- oder orientierungsrelevanten Informationen oberhalb von Schnittpunkten zwischen die Informationen betreffenden ausgedehnten Kartenelementen, wie Straßen, Zielstrecken, Autobahnen oder ähnlichem, und einem Kreis, dessen Mittelpunkt durch die Fahrzeugposition gegeben ist, oder einer Linie parallel zum Horizont gezeichnet werden.

7. Navigationseinrichtung (100) mit einer Anzeigeeinrichtung (14), einer Positionsbestimmungseinheit (24), einem Speichermedium (10), auf welchem zweidimensionale topographische Informationen mit einem Netzwerk von Straßensegmenten gespeichert sind oder speicherbar sind, und einer Umwandlungseinheit (18, 20) zur Umwandlung der topographischen Informationen in eine visuelle Darstellung einer digitalen Straßenkarte (16) entsprechend eines virtuellen, erhöhten Blickpunktes,
**wobei** die Umwandlungseinheit (18, 20) Mittel zum Zeichnen von Bildelementen mit navigations- oder orientierungsrelevanten Informationen umfasst, so dass die visuelle Darstellung der digitalen Straßenkarte (16) einen die topographischen Informationen enthaltenen ersten Bereich (28) und einen von dem ersten Bereich (28) durch einen Horizont (30) getrennten zweiten Bereich (32) aufweist,
wobei im zweiten Bereich (32) navigations- oder orientierungsrelevante Informationen als Bildelemente gezeichnet werden,
wobei die navigations- oder orientierungsrelevanten Informationen die Lage von Städten, insbesondere Großstädten (36), oder Verkehrsstrecken, insbesondere Autobahnen (34), beinhalten und
wobei Städte angezeigt werden, deren Verhältnis ihrer Größe zu ihrem geographischen Abstand von der Fahrzeugposition einen vorbestimmten Wert übersteigt oder die auf einer von einem Benutzer gewählten Route liegen.

## Claims

1. Method for the three-dimensional presentation of at least one portion of a digital road map in a navigation system (100), wherein topographical information is selected from data stored on a storage medium (10) on the basis of a position and a direction of travel of a motor vehicle and is converted into a visual presentation of the digital road map (16) in accordance with a virtual, elevated aspect using coordinate transformation, so that the visual presentation of the digital road map (16) has a first region (28) containing the topographical information and a second region (32) that is separated from the first region (28) by a horizon (30),
wherein navigation-relevant or orientation-relevant information is depicted as image elements in the second region (32),
wherein the navigation-relevant or orientation-relevant information contains the situation of towns, particularly cities (36), or traffic routes, particularly motorways (34), and
wherein towns for which the ratio of the magnitude thereof to the geographical distance thereof from the vehicle position exceeds a predetermined value or that are situated on a route chosen by a user are displayed.

2. Method according to Claim 1,
**characterized in that**
the navigation-relevant or orientation-relevant information comprises short-range instructions.

3. Method according to either of the preceding claims,
**characterized in that**
the navigation-relevant or orientation-relevant information comprises information about destinations or destination routes.

4. Method according to one of the preceding claims,
**characterized in that**
the navigation-relevant or orientation-relevant information contains points of the compass.

5. Method according to one of the preceding claims,
**characterized in that**
the navigation-relevant or orientation-relevant information is depicted above the map elements relating thereto, such as towns or destinations.

6. Method according to one of the preceding claims,
**characterized in that**
the navigation-relevant or orientation-relevant information is depicted above points of intersection between extensive map elements relating to the information, such as roads, destination routes, motorways or the like, and a circle, the centre of which is provided by the vehicle position, or a line parallel to the horizon.

7. Navigation device (100) having a display device (14), a position-finding unit (24), a storage medium (10), which stores or can be used to store two-dimensional topographical information with a network of road segments, and a conversion unit (18, 20) for converting the topographical information into a visual presentation of a digital road map (16) in accordance with a virtual, elevated aspect,
wherein the conversion unit (18, 20) comprises means for depicting image elements with navigation-relevant or orientation-relevant information, so that the visual presentation of the digital road map (16) has a first region (28) containing the topographical information and a second region (32) that is separated from the first region (28) by a horizon (30),
wherein navigation-relevant or orientation-relevant information is depicted as image elements in the second region (32),
wherein the navigation-relevant or orientation-relevant information contains the situation of towns, particularly cities (36), or traffic routes, particularly motorways (34), and
wherein towns for which the ratio of the magnitude thereof to the geographical distance thereof from the vehicle position exceeds a predetermined value or that are situated on a route chosen by a user are displayed.

## Revendications

1. Procédé de représentation tridimensionnelle d'au moins une partie d'une carte routière numérique dans un système de navigation (100), des informations topographiques étant sélectionnées à partir de données enregistrées sur un support d'enregistrement (10) en fonction d'une position et d'un sens de circulation d'un véhicule automobile et étant transférées dans une représentation visuelle de la carte routière numérique (16) conformément à un point d'observation virtuel élevé en utilisant une transformation de coordonnées de sorte que la représentation visuelle de la carte routière numérique (16) présente une première zone (28) contenant les informations topographiques et une deuxième zone (32) séparée de la première zone (28) par un horizon (30),
des informations en rapport avec la navigation ou l'orientation étant dessinées sous la forme d'éléments d'image dans la deuxième zone (32),
les informations en rapport avec la navigation ou l'orientation contenant la position de villes, notamment de grandes villes (36), ou de parcours de circulation, notamment d'autoroutes (34), et
les villes affichées étant celles dont le rapport entre leur taille et leur distance géographique de la position du véhicule dépasse une valeur prédéfinie ou qui se trouvent sur un trajet sélectionné par un utilisateur.

2. Procédé selon la revendication 1, **caractérisé en ce que** les informations en rapport avec la navigation ou l'orientation comprennent des instructions de zone de proximité.

3. Procédé selon l'une des revendications précédentes, **caractérisé en ce que** les informations en rapport avec la navigation ou l'orientation comprennent des informations sur des lieux de destination ou des parcours de destination.

4. Procédé selon l'une des revendications précédentes, **caractérisé en ce que** les informations en rapport avec la navigation ou l'orientation comprennent des points cardinaux.

5. Procédé selon l'une des revendications précédentes, **caractérisé en ce que** les informations en rapport avec la navigation ou l'orientation sont dessinées au-dessus des éléments de carte qu'elles concernent tels que des villes ou des lieux de destination.

6. Procédé selon l'une des revendications précédentes, **caractérisé en ce que** les informations en rapport avec la navigation ou l'orientation sont dessinées au-dessus de points d'intersection entre des éléments de carte étendus concernant les informations comme des routes, des parcours de destination, des autoroutes ou similaires, et un cercle dont le point central est défini par la position du véhicule, ou une ligne parallèle à l'horizon.

7. Dispositif de navigation (100) comprenant un dispositif d'affichage (14), une unité de détermination de la position (24), un support d'enregistrement (10), sur lequel sont enregistrées ou peuvent être enregistrées des informations topographiques bidimensionnelles avec un réseau de segments routiers, et une unité de conversion (18, 20) pour la conversion des informations topographiques en une représentation visuelle d'une carte routière numérique (16) conformément à un point d'observation virtuel élevé, l'unité de conversion (18, 20) comprenant des moyens pour dessiner des éléments d'image comprenant des informations en rapport avec la navigation ou l'orientation de telle sorte que la représentation visuelle de la carte routière numérique (16) présente une première zone (28) contenant les informations topographiques et une deuxième zone (32) séparée de la première zone (28) par un horizon (30),
des informations en rapport avec la navigation ou l'orientation étant dessinées sous la forme d'éléments d'image dans la deuxième zone (32),
les informations en rapport avec la navigation ou l'orientation contenant la position de villes, notamment de grandes villes (36), ou de parcours de circulation, notamment d'autoroutes (34), et
les villes affichées étant celles dont le rapport entre leur taille et leur distance géographique de la position du véhicule dépasse une valeur prédéfinie ou qui se trouvent sur un trajet sélectionné par un utilisateur.
